# EUROPÄISCHE PATENTANMELDUNG

(11) **EP 4 235 992 A1**
(43) Veröffentlichungstag der Anmeldung: **30.08.2023**
(21) Anmeldenummer: 23156545.8
(22) Anmeldetag: 14.02.2023
(51) Int. Cl.: H02G 5/00, H02G 5/02, H02B 1/20

(54) **STROMSCHIENEN-ANORDNUNG ZUR ELEKTRISCHEN LEISTUNGSVERSORGUNG EINER ELEKTRISCHEN KOMPONENTE SOWIE BORDNETZ EINES KRAFTFAHRZEUGS MIT EINER SOLCHEN STROMSCHIENEN-ANORDNUNG**

(30) Priorität: 25.02.2022 DE 102022201987
(71) Anmelder: LEONI Bordnetz-Systeme GmbH, 97318 Kitzingen (DE); LEONI Wiring Systems Slovakia spol. s r.o., 911 01 Trencin (SK)
(72) Erfinder: ENDRES, Michael, 97299 Zell am Main (DE); FALASTA, Stefan, 911 01 Trencin (SK); HILLENKÖTTER, Sven, 97508 Untereuerheim (DE); KORTE, Matthias, 97084 Würzburg (DE); MARKERT, Jonathan, 97234 Reichenberg (DE); SOOSAI DAS, Gerard, 97070 Würzburg (DE)
(74) Vertreter: FDST Patentanwälte

(57) **Zusammenfassung**

Die Erfindung betrifft eine Stromschienen-Anordnung (2) zur elektrischen Leistungsversorgung einer elektrischen Komponente (24,28), insbesondere für ein Kraftfahrzeug (22), mit einer ersten Teilschiene (4) sowie mit einer zweiten Teilschiene (4), die jeweils einen sich in einer Längsrichtung (L) erstreckenden Hauptabschnitt (6) sowie einen Endabschnitt (8) mit einem Verbindungsflansch (10) aufweisen, über den die beiden Teilschienen (4) in Längsrichtung (L) miteinander verbindbar sind. Zur Ermöglichung eines Längenausgleichs in Längsrichtung (L) ist der Endabschnitt (8) zumindest einer der Teilschienen (4) gebogen ausgebildet. Hierdurch sind ein einfacher Transport, eine einfache Montage und ein zuverlässiger Betrieb auch bei Temperaturschwankungen bei geringem konstruktivem Aufwand und geringen Kosten erreicht.

## Beschreibung

Die Erfindung betrifft eine Stromschienen-Anordnung zur elektrischen Leistungsversorgung einer elektrischen Komponente sowie ein Bordnetz für ein Kraftfahrzeug mit einer solchen Stromschienen-Anordnung.

Über eine Stromschiene erfolgt in einem Kraftfahrzeug-Bordnetz üblicherweise eine Leistungsverteilung. Die Stromschiene wird beispielsweise als Batterieleitung oder allgemein als eine Hauptversorgungsleitung, dem sogenannten Backbone eingesetzt. Ein solcher wird üblicherweise von einem vorderen Fahrzeugteil in einen hinteren Fahrzeugteil geführt. Die Stromschienen sind dabei typischerweise zur Übertragung von hohen Strömen von zumindest mehreren 10A, typischerweise von mehr als 100A ausgebildet.

Solche Stromschienen werden insbesondere auch bei elektromotorisch angetriebenen Elektro- oder Hybridfahrzeugen zur Übertragung von hohen elektrischen Leistungen im Bereich von mehreren KW bis hin zu mehreren 100 KW eingesetzt. Beispielsweise werden derartige Leitungen zur Leistungsversorgung von elektrischen Komponenten des Antriebsstranges, beispielsweise zur Leistungsversorgung eines elektrischen Fahrmotors oder zum Anschluss einer (Traktions-) Batterie eingesetzt. Bei solchen Stromschienen handelt es sich häufig um Gleichstromleitungen (DC-Leitungen), bei denen die eine Stromschiene als Versorgungsleitung ausgebildet ist und beispielsweise mit einem Pluspol der Batterie verbunden ist und bei dem die andere Stromschiene als eine Masseleitung ausgebildet ist, welche mit dem Massepotential oder auch mit dem Minuspol der Batterie verbunden ist.

Neben solchen Hochvolt-Anwendungen werden Stromschienen auch bei Niedervolt-Bordnetzen eingesetzt.

Derartige Stromschienen erstrecken sich bei dem Einsatz als Backbone für ein Kraftfahrzeug über eine vergleichsweise große Länge und sind daher sehr lang. Aufgrund ihrer Auslegung für sehr hohe Ströme sind ergänzend sehr massiv und steif ausgebildet. Derartige Stromschienen werden typischerweise von einem Bordnetz-Zulieferer vorgefertigt und an eine Montagelinie geliefert, bei der sie dann in das Kraftfahrzeug eingebaut werden. Die große Länge führt beim Transport und der Montage zu einem gewissen Aufwand. Aus der EP 3 674 145 A1 ist speziell für einen derartigen Backbone vorgesehen, dass dieser einen Biegeabschnitt aufweist, sodass er zu Transportzwecken umgebogen werden kann.

Im Betrieb erfährt aufgrund der hohen Strömen eine solche Stromschienen-Anordnung auch eine hohe thermische Belastung. Um thermisch bedingte Längenänderungen kompensieren zu können, ist gemäß der EP 3 702 219 A1 vorgesehen, dass zwischen zwei Stromschienen ein Längenausgleich-Element eingefügt ist, welches aus gestapelten, biegsamen Lamellen gebildet ist.

Die DE 10 2018 205 212 A1 befasst sich mit dem Problem, dass bei einem derartigen Backbone im Falle eines Aufpralls des Fahrzeugs über den Backbone ein Stoß ohne Dämpfung übertragen werden kann. Um dies zu vermeiden weist die darin beschriebene Stromschienen-Anordnung ein Stoßabsorptionsteil auf, welches beispielsweise nach Art einer mehrfachen Faltung der massiven Stromschienen ausgebildet ist. In einer alternativen Ausgestaltung sind einzelne Stromschienen-Abschnitte miteinander verschraubt, wobei die Schrauben in Langlöchern geführt sind, sodass im Falle eines Stoßes die flach aufeinanderliegenden Stromschienen-Abschnitte in Richtung des Langloches gegeneinander verschoben werden können.

Ausgehend hiervon liegt der Erfindung die Aufgabe zugrunde, eine Stromschienen-Anordnung speziell für einen derartigen Backbone eines Kraftfahrzeugs anzugeben, welcher eine einfache Montage sowie einen zuverlässigen Betrieb ermöglicht.

Die Aufgabe wird gemäß der Erfindung gelöst durch eine Stromschienen-Anordnung zur elektrischen Leistungsversorgung einer elektrischen Komponente, insbesondere für ein Kraftfahrzeug, sowie durch ein Bordnetz eines Kraftfahrzeugs mit einer solchen Stromschienen-Anordnung. Die Stromschienen-Anordnung weist eine erste Teilschiene sowie eine zweite Teilschiene auf, die sich in einer (Schienen-) Längsrichtung aneinander anschließen. Jede Teilschiene weist dabei einen sich in Längsrichtung erstreckenden Hauptabschnitt sowie einen sich daran anschließenden Endabschnitt mit einem endseitigen Verbindungsflansch auf. Über den Verbindungsflansch sind die beiden Teilschienen - in Längsrichtung aufeinander folgend - miteinander verbindbar und im montierten Zustand miteinander verbunden. Der Endabschnitt zumindest einer der Teilschienen ist dabei als ein gebogener Schienenabschnitt mit einer Biegeelastizität zur Ermöglichung eines Längenausgleichs ausgebildet. Der Längenausgleich wird durch die Biegeelastizität bei fest miteinander verbundenen Teilschienen ermöglicht. D.h. eine Längenänderung, beispielsweise eine thermisch bedingte Längenänderung, wird durch die Biegeelastizität und durch eine (reversible) Veränderung der Biegung des gebogenen Schienenabschnitts kompensiert. Der gebogene Endabschnitt wirkt daher nach Art eines federnden Endabschnittes, um den gewünschten Längenausgleich zu ermöglichen.

Bei der erfindungsgemäßen Ausgestaltung ist daher der Endabschnitt, mit dem die beiden Teilschiene miteinander verbindbar sind, selbst als ein Längenausgleichs-Abschnitt ausgebildet. Durch die endseitige Ausgestaltung ist zum einen eine einfache Herstellung und Fertigung dieser Teilschiene ermöglicht. Grundsätzlich ist durch die Aufteilung in zumindest zwei Teilschienen ein vereinfachter Transport von einem Hersteller der Stromschienen-Anordnung an eine Montagestätte für die Endmontage des Kraftfahrzeugs ermöglicht. Aufgrund des vorzugsweise nur an einer Endseite der Teilschiene ausgebildeten, gebogenen Endabschnittes bei ansonsten flacher Teilschiene lassen sich die Teilschienen zudem auch besonders platzsparend und kompakt verpacken und transportieren.

Durch den gebogenen Endabschnitt ist weiterhin im Betrieb ein Längenausgleich, beispielsweise aufgrund von thermisch bedingten Längenänderungen gewährleistet und damit ein zuverlässiger Betrieb sichergestellt. Speziell sind gegenüberliegende Anschlusspunkte der Stromschienen-Anordnung, mit der diese an elektrischen Komponenten des Kraftfahrzeugs angeschlossen ist, vor hohen thermisch oder mechanisch bedingten Kräften geschützt.

Darüber hinaus ermöglicht diese Ausgestaltung auch eine vereinfachte Montage, da Längentoleranzen ohne weiteres ausgeglichen werden können.

Die beiden Stromschienen sind im Bereich des gebogenen Endabschnittes fest miteinander verbunden. D.h. die Verbindungsstelle selbst ermöglicht keinen Längenausgleich.

Der besondere Vorteil der Ausbildung des Endabschnittes als Längenausgleich zeigt sich besonders auch bei der Montage. Sofern nämlich beispielsweise die gesamte Stromschienen-Anordnung über ihre Länge etwas gedehnt werden muss, um zwei vordefinierte Anschlusspunkte mit den beiden gegenüberliegenden Enden der Stromschienen-Anordnung miteinander zu verbinden, so kann die hierfür erforderliche Kraft mithilfe eines Verbindungselements, wie beispielsweise eine Schraube, aufgebracht werden, über die die beiden Teilschienen miteinander verbunden werden. Hierbei wird in einfacher Weise durch eine Veränderung der Biegung des zumindest einen Endabschnittes der gewünschte Längenausgleich hergestellt.

Bei den Teilschienen handelt sich vorzugsweise allgemein um massive Flachleiter aus einem leitfähigen Material, wie beispielsweise Kupfer oder Aluminium, die regelmäßig einen typischerweise rechteckförmigen Querschnitt aufweisen. Unter massiver Flachleiter wird ein Flachleiter aus Vollmaterial verstanden. Die Schienen weisen dabei typischerweise in einer Vertikalrichtung eine Dicke im Bereich zwischen 0,5 und 1,5 cm und in einer zur Vertikalrichtung senkrechten Querrichtung eine Breite im Bereich von 2-6 cm auf. Das Verhältnis der Breite zur Dicke liegt dabei typischerweise bei zumindest 2 : 1 oder auch bei zumindest 3 : 1 oder darüber.

Sofern vorliegend von einem gebogenen Endabschnitt gesprochen wird, so wird hierunter verstanden, dass der sich an den Hauptabschnitt anschließende Endabschnitt aus der durch den Hauptabschnitt gebildeten Ebene (x-y-Ebene) herausgebogen und umgebogen ist.

Der gesamte Endabschnitt erstreckt sich dabei typischerweise um zumindest 180°. Er ist bevorzugt zumindest annähernd U-förmig ausgebildet. Unter zumindest annähernd U-förmig wird verstanden, dass der Endabschnitt zumindest einen nach oben sowie zumindest einen nach unten orientierten Schienenabschnitt aufweist, wobei diese beiden Abschnitte in Längsrichtung elastisch gegeneinander versetzt werden können. Der gebogene Endabschnitt weist hierbei zumindest einen Bogenabschnitt auf, welcher zwischen den nach oben und nach untern orientierten Schienenabschnitten angeordnet ist.

In bevorzugter Ausgestaltung ist der eine Schienenabschnitt als ein endseitiger Schienenabschnitt ausgebildet und bildet zugleich den Verbindungsflansch aus, an dem die beiden Teilschienen fest miteinander verbunden sind.

Die beiden Schienenabschnitte verlaufen dabei vorzugsweise nicht parallel zueinander, d.h. sie sind bezüglich der x-y-Ebene des Hauptabschnittes unter unterschiedlichen Winkeln orientiert. Einer oder beide Schienenabschnitte, insbesondere der Verbindungsflansch verlaufen bevorzugt geradlinig.

Es können dabei auch mehr als zwei nach oben und unten orientierte Schienenabschnitte vorgesehen sein, so dass beispielsweise der Endabschnitt in einer Seitenansicht betrachtet Z-förmig, zick-zack-förmig oder wellenförmig ausgebildet ist.

Bevorzugt ist der Endabschnitt jedoch durch die zuvor beschriebene zumindest annähernd U-förmige Gestalt gebildet mit lediglich einem ansteigenden und einem abfallenden Schienenabschnitt.

Der Endabschnitt muss nicht zwingend kontinuierlich gekrümmt verlaufen. Vielmehr weist der Endabschnitt bevorzugt auch geradlinig verlaufende Schienenabschnitte auf. Ein jeweiliger Bogenabschnitt ist um eine in Querrichtung orientierte Achse umgebogen.

Gemäß einer bevorzugten Ausgestaltung sind die Endabschnitte beider Teilschienen jeweils gebogen ausgebildet. Hierdurch erhöht sich in vorteilhafter Weise insgesamt der mögliche Längenausgleich.

Bevorzugt handelt sich darüber hinaus bei den Teilschienen um Gleichteile, d. h. die Teilschiene sind identisch ausgestaltet. Hierdurch sind die Kosten niedrig gehalten.

In bevorzugter Ausgestaltung ist der jeweilige Verbindungsflansch als eine vertikale Lasche ausgebildet und die beiden Endabschnitte liegen im verbundenen Zustand mit ihren aneinander zugewandten Flachseiten der Laschen aneinander an.

Unter vertikaler Lasche wird eine Orientierung des Verbindungsflansches im Wesentlichen in vertikaler Richtung, also im Wesentlichen senkrecht zur Längsrichtung verstanden. Unter im Wesentlichen in vertikaler Richtung wird vorliegend sowohl die vertikale Richtung als auch eine Abweichung von der mathematischen Vertikalrichtung um bis zu +/- 30°, vorzugsweise um lediglich +/- 20° verstanden. Bevorzugt sind die Laschen jeweils exakt unter 90° zur Längsrichtung orientiert oder sind zu dieser lediglich beispielsweise bis zu 5° leicht geneigt orientiert.

Durch die vertikale Orientierung der Verbindungsflansche wird der besondere Vorteil erzielt, dass bei der Verbindung der beiden Teilschienen mithilfe eines Befestigungselements, insbesondere mithilfe einer Schraube, über das Befestigungselement auf die beiden Teilschiene eine in Längsrichtung wirkende Kraft ausgeübt wird, sodass die Kräfte zur Überwindung von eventuellen Montagetoleranzen in Längsrichtung nicht von dem Monteur, sondern über das Befestigungselement aufgebracht werden können. Dadurch ist die Montage insgesamt vereinfacht.

In bevorzugter Ausgestaltung schließt sich unmittelbar an die vertikale Lasche ein Bogenabschnitt an. An diesen schließt sich dann wiederum ein weiterer in Richtung zum Hauptabschnitt verlaufender Schienenabschnitt an. Alternativ bildet der Bogenabschnitt zugleich diesen zum Hauptabschnitt verlaufenden Schienenabschnitt aus. Zur Ausbildung des Endabschnitts weist eine jeweilige Teilschiene daher anschließend an den sich in Längsrichtung erstreckenden Hauptabschnitt zunächst einen nach oben gebogenen Abschnitt auf, welcher anschließend in die vertikale Lasche übergeht.

Bevorzugt bildet der gebogene Endabschnitt dabei lediglich insgesamt einen Halbbogen aus. Hierunter wird verstanden, dass der Endabschnitt, also inklusive dem Verbindungsflansch, vorzugsweise lediglich genau einen nach oben und genau einen nach unten orientierten Abschnitt aufweist. Speziell erstreckt sich der Endabschnitt über einen Winkelbereich von genau oder etwa 180°, also beispielsweise über einen Winkelbereich zwischen 160° und 200°. Der Endabschnitt weist bevorzug insgesamt zwei gegenläufig gekrümmte Bogenabschnitte auf. Mit einem ersten geht der Endabschnitt an einem Ende in den Hauptabschnitt über und mit dem anderen Bogenabschnitt in den Verbindungsflansch.

In bevorzugter Ausgestaltung sind die beiden Verbindungsflansche über eine Schraubverbindung miteinander verbindbar. Hierzu weisen die Verbindungsflansche je jeweils ein Durchgangsloch auf. Bei der Ausführungsvariante mit den vertikalen Laschen ist eine entsprechende Schraube für die Schraubverbindung daher im montierten Zustand in Längsrichtung orientiert.

Die Stromschienen-Anordnung ist vorzugsweise für den Einsatz als Backbone in einem Kraftfahrzeug vorgesehen. Die Länge der Stromschienen Anordnung wird dabei vorzugsweise zumindest im Wesentlichen festgelegt durch die Länge der beiden Teilschienen. Entsprechend ist auch vorzugsweise vorgesehen, dass der jeweilige Hauptabschnitt einer Teilschiene ein Vielfaches länger ist als der Endabschnitt. Die Länge des Hauptabschnitts beträgt dabei beispielsweise zumindest das 10 -fache oder auch zumindest das 15-fache oder 20-fache der Länge des Endabschnitts.

Insgesamt weist eine jeweilige Teilschiene vorzugsweise eine Länge von grö-ßergleich 0,5 m, insbesondere von größergleich 0,75 m auf. Die Gesamtlänge der Stromschienen-Anordnung, die im eingebauten Zustand vorzugsweise einen rückwärtigen Bereich des Kraftfahrzeugs mit einem vorderen Bereich verbindet, liegt häufig im Bereich zwischen 1,5 m - 4 m, speziell im Bereich zwischen 1,5 m - 2,5 m.

Die Stromschienen-Anordnung ist allgemein mit ihren beiden gegenüberliegenden Enden zur elektrischen und mechanischen Kontaktierung und Befestigung an einer elektrischen Komponente des Bordnetzes ausgebildet. Für einen solchen Anschluss weist ein jeweiliger Endabschnitt daher vorzugsweise ein geeignetes Anschlussterminal auf. Bei diesem Anschlussterminal handelt sich in einfachster Ausgestaltung um ein Durchgangsloch im Hauptabschnitt oder um eine am Hauptabschnitt befestigte Anschlussfahne mit einem Durchgangsloch für eine Schraube, zur Verbindung beispielsweise mit einem Anschlussbolzen der elektrischen Komponente.

Bei der elektrischen Komponente handelt sich dabei allgemein vorzugsweise um eine Versorgungsquelle, wie beispielsweise eine Batterie oder einen Generator, um einem elektrischen Verbraucher, beispielsweise ein Motor, ein Wechselrichter, eine Heizung usw. oder auch um einen Leistungsverteiler, über den die über die Stromschienen-Anordnung bereitgestellte Leistung auf mehrere abgehende elektrische Leitungen aufgeteilt wird, wobei die abgehenden elektrischen Leitungen üblicherweise jeweils über ein Sicherungselement abgesichert sind.

In bevorzugter Ausgestaltung weist die Stromschienen Anordnung zusätzlich eine Abzweigleitung auf, die beispielsweise als eine weitere Stromschiene oder auch als ein Kabel oder eine herkömmliche Mantelleitungen ausgebildet ist. Diese Abzweigleitung weist dabei ein weiteres Anschlussterminal auf, welches elektrisch mit der Stromschienen-Anordnung kontaktiert ist. In bevorzugter Ausgestaltung ist dabei das Anschlussterminal im montierten Zustand an zumindest einem der Verbindungsflansche der Teilschiene befestigt, insbesondere über eine Schraubverbindung.

In bevorzugter Ausgestaltung ist das weitere Anschlussterminal im montierten Zustand zwischen den beiden Verbindungsflanschen der beiden Teilschienen angeordnet und insbesondere zwischen diesen eingeklemmt. Die Verbindung mit dem weiteren Anschlussterminal erfolgt dabei mit dem Befestigungselement, insbesondere eine Schraube, mit dem die beiden Verbindungsflansche miteinander verbunden sind. Insgesamt ist durch die Ausgestaltung mit den beiden Teilschienen auch problemlos der Anschluss einer solchen Abzweigleitung ermöglicht, sodass beispielsweise in einem Mittenbereich des Backbones ein weiterer Leistungsabzweig bereitgestellt ist.

Die Stromschienen-Anordnung ist im montierten Zustand Teil eines Bordnetzes eines Kraftfahrzeuges und wird allgemein zur Leistungsversorgung von elektrischen Komponenten eingesetzt, speziell als Hauptversorgungsstrang (Backbone) wie dies eingangs definiert wurde. Die Stromschienen-Anordnung ist dabei insbesondere Teil einer Gleichstrom-Leitung und definiert beispielsweise einen Hinleiter, der auf einem positiven Bordnetz-Spannungspotenzial liegt oder auch einen Rückleiter, welcher mit Massepotenzial verbunden ist.

Bei dem Bordnetz kann es sich um ein herkömmliches 12 V-Bordnetz, um ein 48 V-Bordnetz oder auch um ein Hochvolt-Bordnetz mit beispielsweise Gleichspannungen über 60 V oder auch mit einer höheren Bordnetz-Spannung handeln. Bevorzugt handelt sich um einen Hochvolt-Bordnetz für ein elektrisch angetriebenes Fahrzeug und ist insbesondere Teil eines elektrischen Antriebsstranges mit einem elektrischen Fahrmotor. Insbesondere in diesem Fall liegt die Bordnetz-Spannung typischerweise bei einigen 100 V und beispielsweise im Bereich zwischen 300 V und 1000 V.

Ausführungsbeispiele der Erfindung werden nachfolgend anhand der Figuren näher erläutert.

Diese zeigen in teilweise stark vereinfachten Darstellungen:
- FIG 1: eine perspektivische Darstellung einer Stromschienen-Anordnung,
- FIG 2: die Stromschienen-Anordnung gemäß FIG 1 in einer Seitenansicht,
- FIG 3: die Stromschienen-Anordnung gemäß FIG 1 und FIG 2 in einer alternativen Variante mit einer angeschlossenen Abzweigleitung sowie
- FIG 4: eine vereinfachte Darstellung eines Fahrzeugs mit einem Bordnetz, aufweisend die Stromschienen-Anordnung.

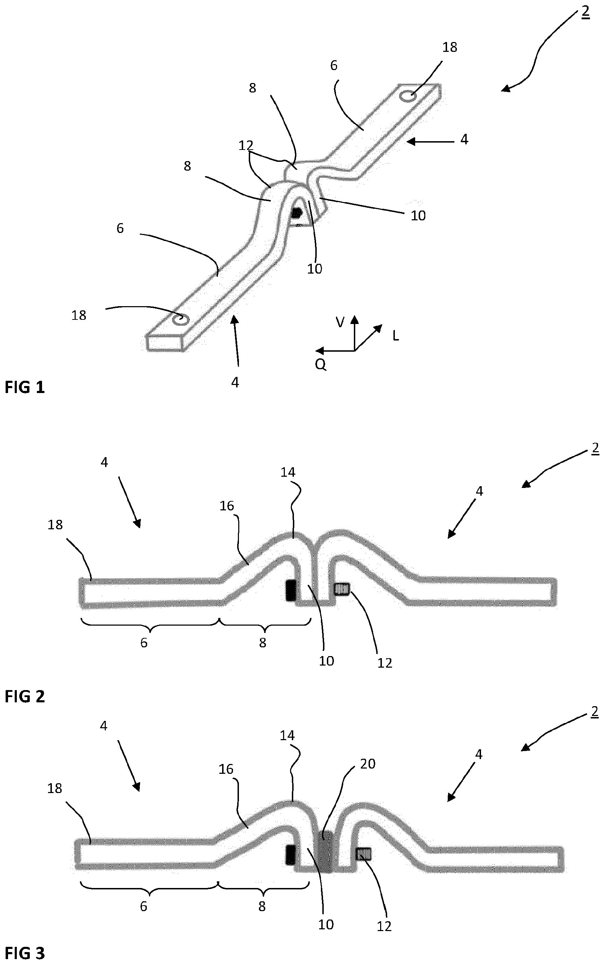

Die in den FIG 1-3 dargestellten Stromschienen-Anordnungen 2 weisen jeweils zwei Teilschienen 4 auf. Die Teilschienen 4 und damit die gesamte Stromschienen-Anordnung 2 erstrecken sich in einer Längsrichtung L. Bei den Teilschienen 4 handelt es sich um massive Flachleiter-Schienen aus einem leitfähigen Material, speziell aus Kupfer oder Aluminium, die ergänzend in hier nicht näher dargestellter Weise üblicherweise unmittelbar von einem Isolationsmantel umgeben sind.

Die Teilschienen 4 weisen ein rechteckförmiges Querschnittsprofil auf. In einer Querrichtung Q weisen Sie eine Breite und in einer Vertikalrichtung V weisen Sie eine Dicke auf. Die Längsrichtung L, die Querrichtung Q sowie die Vertikalrichtung V sind senkrecht zueinander orientiert. Das Querschnittsprofil der Teilschiene 4 ist vorzugsweise über ihre gesamte Länge konstant.

Eine jeweilige Teilschiene 4 weist einen Hauptabschnitt 6 sowie einen Endabschnitt 8 auf. Speziell ist die Teilschiene 4 durch diese beiden Abschnitte 6,8 und gegebenenfalls einem zusätzlichen Anschlussterminal 18 abschließend gebildet. Die Längsrichtung L ist durch die Erstreckungsrichtung des Hauptabschnitts 6, speziell im Bereich vor dem Endabschnitt 8 definiert. Das Verhältnis der Längen der Hauptabschnitte 6 zu den Endabschnitten 8 ist in den Figuren nicht maßstabsgetreu. Der Hauptabschnitt 6 spannt in Längsrichtung L und in Querrichtung Q eine Ebene auf (x-y-Ebene).

Der Endabschnitt 8 ist insgesamt bogenförmig ausgebildet. Speziell ist er im weitesten Sinne U-förmig ausgebildet. An seinem dem Hauptabschnitt 6 gegenüberliegenden Ende weist er einen Verbindungsflansch 10 auf. Dieser ist jeweils als eine (bezüglich der x-y-Ebene) vertikal orientierte Lasche ausgebildet. Diese weist im Ausführungsbeispiel jeweils ein Durchgangsloch für eine Schraubverbindung mittels einer Schraube 12 auf. Die Teilschienen 4 sind über die Verbindungsflansche 10 sowohl mechanisch als auch elektrisch kontaktierend miteinander verbindbar und im eingebauten Zustand miteinander verbunden.

In Richtung zum Hauptabschnitt 6 schließt sich unmittelbar an den Verbindungsflansch 10 ein Bogenabschnitt 14 an. Dieser weist auf oder geht über in einen zum Hauptabschnitt 6 abfallenden Schienenabschnitt 16, welcher endseitig in den Hauptabschnitt 6 übergeht. Der Übergang erfolgt beispielsweise durch eine Abwinklung und/ oder bogenförmig unter Ausbildung eines weiteren Bogenabschnitts Der Schienenabschnitt 16 ist daher entlang einer gedachten Querachse, die in Querrichtung Q verläuft, bezüglich des Hauptabschnitts 6 abgewinkelt bzw. umgebogen. Der Bogenabschnitt 14 und dieser weitere Bogenabschnitt sind dabei gegenläufig gekrümmt.

Im Ausführungsbeispiel ist der Schienenabschnitt 16 geradlinig ausgebildet. Sofern vorliegend von einer im wesentlichen U-förmigen Ausgestaltung des Endabschnitts 8 gesprochen wird, so wird hierunter verstanden, dass sich der Endabschnitt 8 insgesamt über einen Winkelbereich von etwa 180° erstreckt, mit einem - ausgehend von seinem einen Ende am Hauptabschnitt 6 - nach oben abgebogenen Schienenabschnitt (hier Schienenabschnitt 16) - und einem wieder nach unten abgebogenen Schienenabschnitt, der durch den Verbindungsflansch 10 gebildet ist. Diese beiden Schienenabschnitte 16,10 bilden daher quasi die U-Schenkel der U-förmigen Ausgestaltung. Die beiden Schenkel sind vorzugsweise unter unterschiedlichen Winkeln schräg zur Längsachse L orientiert, wie dies speziell anhand der FIG 2 und FIG 3 zu erkennen ist. Diese beiden Schenkel verlaufen im Ausführungsbeispiel geradlinig und werden durch den Bogenabschnitt 14 miteinander verbunden.

Gegenüberliegend zu dem Endabschnitt 8 weist eine jeweilige Teilschiene 4 ein Anschlussterminal 18 auf. Zu dessen Ausbildung ist im Ausführungsbeispiel der FIG 1 jeweils ein Durchgangsloch vorgesehen, welches zur elektrischen und mechanischen Verbindung mit einer weiteren elektrischen Komponente herangezogen wird. Beispielsweise wird die jeweilige Teilschiene 4 mithilfe des Anschlussterminals 18 mit einem Anschlussbolzen der weiteren Komponente verschraubt. Alternative Ausgestaltungen des Anschlussterminals 18 sind auch möglich. Beispielsweise ist ein separates Bauteil als Anschlussterminal 18 am Hauptabschnitt 6 befestigt, beispielsweise angeschweißt, welches vorzugsweise ebenfalls als massives Teil und beispielsweise nach Art einer Anschlussfahne ausgebildet ist. Im Bereich des Anschlussterminals 18 kann der Hauptabschnitt 6 daher eine andere Querschnittsgeometrie als im übrigen Bereich aufweisen.

Bei der Ausführungsvariante gemäß FIG 3 ist zwischen den beiden Verbindungsflanschen 10 noch ein weiteres Anschlussterminal 20 einer hier nicht näher dargestellten Abzweigleitung angeordnet. Über diese Abzweigleitung und dem weiteren Anschlussterminal 20 erfolgt ein Leistungsabzweig, vorzugsweise in etwa in der Mitte der Stromschienen-Anordnung 2. Das weitere Anschlussterminal 20 weist hierzu ebenfalls ein Durchgangsloch auf und wird über die Schraube 12 zwischen den beiden Verbindungsflanschen 10 eingeklemmt. Das Anschlussterminal 20 ist beispielsweise endseitig an einer abgehenden Leiterschiene ausgebildet oder beispielsweise auch an einer einadrigen Mantelleitung befestigt.

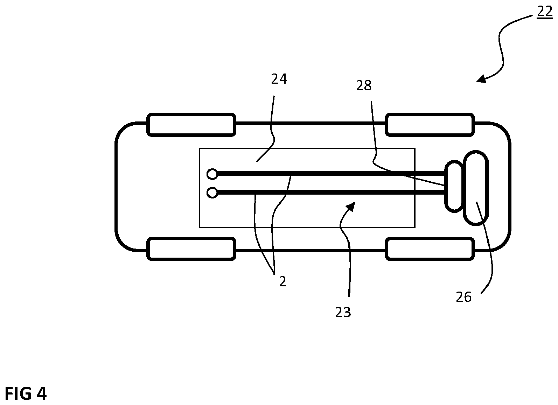

In der FIG 4 ist beispielhaft die Positionierung mehrerer solcher Stromschienen-Anordnungen 2 innerhalb eines Kraftfahrzeugs 22, speziell eines voll elektrisch angetriebenen Kraftfahrzeugs 22 dargestellt. Die Stromschienen-Anordnung 2 ist Teil eines elektrischen Bordnetzes 23 des Kraftfahrzeuges 22. Das Bordnetz 23 weist eine (Traktions-) Batterie 24 auf, die als Gleichstromquelle und insbesondere zur Versorgung eines elektrischen Fahrmotors 26 dient. Im Ausführungsbeispiel verbinden zwei Stromschienen-Anordnungen 2 die Traktionsbatterie 24 mit einem dem Fahrmotor 26 zugeordneten Wechselrichter 28. Die eine Stromschienen-Anordnung 2 verbindet dabei einen Pluspol und die andere Stromschienen-Anordnung 2 verbindet einen Minuspol der Batterie 24 mit entsprechenden Anschlüssen am Wechselrichter 28. Die Stromschienen-Anordnungen 2 sind als Backbone ausgebildet oder Teil eines solchen, über den im Betrieb elektrische Leistung von einem vorderen Fahrzeugbereich in einen hinteren Fahrzeugbereich übertragen wird. Eine jeweilige Stromschienen-Anordnung 2 ist dabei zur Übertragung von Strömen von mehreren 10A und vorzugsweise mehr als 100A ausgebildet. Speziell ist sie für die Übertragung von elektrischen Leistungen von mehreren 10kW bis hin zu mehreren 100kW ausgelegt und eingesetzt.

Durch die spezielle Ausgestaltung mit dem gebogenen Endabschnitt 8 und der Aufteilung in mehrere Teilschienen 4 ist ein einfacher Transport, eine einfache Montage und ein zuverlässiger Betrieb auch bei Temperaturschwankungen bei geringem konstruktivem Aufwand und geringen Kosten erreicht.

### Bezugszeichenliste

- 2: Stromschienen-Anordnung
- 4: Teilschiene
- 6: Hauptabschnitt
- 8: Endabschnitt
- 10: Verbindungsflansch
- 12: Schraube
- 14: Bogenabschnitt
- 16: Schienenabschnitte
- 18: Anschlussterminal
- 20: weiteres Anschlussterminal
- 22: Kraftfahrzeug
- 23: Bordnetz
- 24: Batterie
- 26: Fahrmotor
- 28: Wechselrichter

- L: Längsrichtung
- Q: Querrichtung
- V: Vertikalrichtung

## Patentansprüche

1. Stromschienen-Anordnung (2) zur elektrischen Leistungsversorgung einer elektrischen Komponente (24,28), insbesondere für ein Kraftfahrzeug (22), mit einer ersten Teilschiene (4) sowie mit einer zweiten Teilschiene (4), die jeweils einen sich in einer Längsrichtung (L) erstreckenden Hauptabschnitt (6) sowie einen Endabschnitt (8) mit einem Verbindungsflansch (10) aufweisen, über den die beiden Teilschienen (4) in Längsrichtung (L) miteinander verbindbar sind, **dadurch gekennzeichnet, dass** der Endabschnitt (8) zumindest einer der Teilschienen (4) gebogen und biegeelastisch ausgebildet ist, so dass durch die Biegeelastizität ein Längenausgleich in Längsrichtung (L) ermöglicht ist.

2. Stromschienen-Anordnung (2) nach dem vorhergehenden Anspruch, wobei der zumindest eine gebogene Endabschnitt (8) zumindest annähernd U-förmig ausgebildet ist mit zwei gegenüber dem Hauptabschnitt (6) ansteigenden und abfallenden Schienenabschnitten (10,16), die über einen Bogenabschnitt (14) miteinander verbunden sind, wobei einer der Schienenabschnitte bevorzugt durch den Verbindungsflansch (10) gebildet ist.

3. Stromschienen-Anordnung (2) nach einem der vorhergehenden Ansprüche, wobei die Endabschnitte (8) beider Teilschienen (4) jeweils gebogen ausgebildet sind.

4. Stromschienen-Anordnung (2) nach einem der vorhergehenden Ansprüche, wobei es sich bei den beiden Teilschienen (4) um Gleichteile handelt.

5. Stromschienen-Anordnung (2) nach einem der vorhergehenden Ansprüche, wobei der jeweilige Verbindungsflansch (10) als eine vertikale Lasche ausgebildet ist und die beiden Endabschnitte (8) im verbundenen Zustand flach aneinander anliegen.

6. Stromschienen-Anordnung (2) nach dem vorhergehenden Anspruch, wobei sich unmittelbar an die vertikale Lasche ein Bogenabschnitt (14) anschließt.

7. Stromschienen-Anordnung (2) nach einem der vorhergehenden Ansprüche, wobei die beiden Verbindungsflansche (10) über eine Schraubverbindung miteinander verbindbar sind.

8. Stromschienen-Anordnung (2) nach einem der vorhergehenden Ansprüche, wobei sich an den jeweiligen Endabschnitt (8) ein Hauptabschnitt (6) anschließt, dessen Länge zumindest dem 10-fachen einer Länge des Endabschnitts (8) beträgt.

9. Stromschienen-Anordnung (2) nach einem der vorhergehenden Ansprüche, wobei die Länge einer jeweiligen Teilschiene (4) größergleich 0,5 m und insbesondere größergleich 0,75 m ist.

10. Stromschienen-Anordnung (2) nach einem der vorhergehenden Ansprüche, wobei ein jeweiliger Hauptabschnitt (6) gegenüberliegend zum Endabschnitt (8) ein Anschlussterminal (18) zum Anschluss an einer elektrischen Komponente (24,28) aufweist.

11. Stromschienen-Anordnung (2) nach einem der vorhergehenden Ansprüche, welche zusätzlich eine Abzweigleitung aufweist, welche ein weiteres Anschlussterminal (20) aufweist, welches im montierten Zustand an zumindest einem der Verbindungsflansche (10) der Teilschienen (4) anliegt.

12. Stromschienen-Anordnung (2) nach dem vorhergehenden Anspruch, wobei das weitere Anschlussterminal (20) im montierten Zustand zwischen den Verbindungsflanschen (10) der beiden Teilschienen (4) angeordnet ist.

13. Bordnetz (23) eines Kraftfahrzeugs (22) mit einer Stromschienen-Anordnung (2) nach einem der vorhergehenden Ansprüche, bei der die beiden Teilschienen (4) elektrisch kontaktierend miteinander verbunden sind.

14. Bordnetz (23) nach dem vorhergehenden Anspruch, bei dem die beiden Teilschienen (4) zwei elektrische Komponenten (24, 28) zur elektrischen Leistungsversorgung miteinander verbinden.

15. Bordnetz (23) nach einem der beiden vorhergehenden Ansprüche, bei dem die Stromschienen-Anordnung (2) einen Backbone ausbildet, der sich von einem vorderen Fahrzeugbereich in einen hinteren Fahrzeugbereich erstreckt.
